# EUROPEAN PATENT SPECIFICATION

(11) **EP 3 169 837 B1**
(45) Date of publication and mention of the grant of the patent: **24.06.2020**
(21) Application number: 15747264.8
(22) Date of filing: 01.07.2015
(51) Int. Cl.: D03D 15/04, D03D 1/00, B60R 16/02, D03D 3/02, B32B 5/02, B32B 15/14, D04C 1/02, D03D 15/00, D03D 15/02, B32B 1/08

(54) **PROTECTIVE SLEEVE WITH BONDED WIRE FILAMENTS AND METHODS OF CONSTRUCTION THEREOF**
SCHUTZHÜLLE MIT GEBONDETEN DRAHTFILAMENTEN UND VERFAHREN ZUR KONSTRUKTION DAVON
MANCHON DE PROTECTION COMPORTANT DES FILAMENTS METALLIQUES LIES ET PROCEDES DE CONSTRUCTION DE CELUI-CI

(30) Priority: 16.07.2014 US 201414433342
(43) Date of publication of application: 24.05.2017
(73) Proprietor: Federal-Mogul Powertrain LLC, Southfield, MI 48034 (US)
(72) Inventor: HARRIS, David A., Coatesville, PA 19320 (US); CHEN, Ming-Ming, West Chester, PA 19382 (US); PIOTROWSKI, Michael, Plymouth Meeting, PA 19462 (US)
(74) Representative: HGF Limited
(86) International application number: PCT/US2015/038751
(87) International publication number: WO 2016/010730

(56) References cited:
- US-A- 3 801 399
- US-A1- 2007 166 495
- US-A1- 2010 084 179

## Description

### BACKGROUND OF THE INVENTION

### 1. Technical Field

This invention relates generally to tubular sleeves for protecting elongate members, and more particularly to tubular sleeves having wire filaments that provide protection against at least one of electromagnetic interference, radio frequency interference, and electrostatic discharge.

### 2. Related Art

It is known that electromagnetic interference (EMI), radio frequency interference (RFI), and electrostatic discharge (ESD) pose a potential problem to the proper functioning of electronic components caused by interference due to inductive coupling between nearby electrical conductors and propagating electromagnetic waves. For example, electrical currents in conductors associated with an electrical power system in an automobile may induce spurious signals in various electronic components, such as an electronic module which controls the functioning of the engine. Such interference could downgrade the performance of control modules or other components in the vehicle, thereby causing the vehicle to act other than as desired.

Similarly, inductive coupling between electrical wiring and the lines carrying data in a computer network or other communication system may have a corrupting effect on the data being transmitted over the network.

The adverse effects of EMI, RFI and ESD can be effectively diminated by proper shielding and grounding of EMI, RFI and ESD sensitive components. For example, wires carrying control signals which may be subjected to unwanted interference may be shielded by using a protective sleeve. The sleeves can be generally flat or cylindrical, wherein the sleeves are formed from electrically conductive and non-conductive constituents, with the conductive constituents typically being grounded via a drain wire interlaced with the sleeve during manufacture of the sleeve. Typically, the conductive constituents take the form of polymeric filaments, such as nylon, coated with a conductive metal, such as a silver coating. Otherwise, it is known to twist or serve individual strands of wire with standard, nonconductive monofilament and/or multifilament yam to form a conductive "hybrid yam." US2010/084179 and US2007/166495 disclose textile sleeves for protecting against EMI.

While RFI, EMI, and ESD sleeves constructed as described above can be generally effective at eliminating electrical interference, the sleeves can be relatively expensive in manufacture, particularly when expensive coatings, such as silver, are used, and can exhibit some inefficiency in establishing and maintaining conductive connections between the conductive fiber constituents. In addition, the conductive coating can be worn off, thereby impacting the ability of the sleeving to provide and maintain RFI, EMI, and/or ESD protection. Further, the sleeves constructed with hybrid yams, with wire being twisted or served with standard, nonconductive monofilament and/or multifilament yarn typically exhibit end fray upon being cold cut, as the wire and standard, nonconductive monofilament and/or multifilament yarn are not fixed or otherwise bonded with one another, and thus, they are free to move relative to one another. Further, the hybrid yams tend to shift relative to one another upon being interlaced, thereby potentially negatively impacting the ability to provide and maintain maximum shielding against EMI, RFI and/or ESD. The shifting has a negative impact as a result of the wires moving from their intended location, which tends to form enlarged openings between the wires, wherein the enlarged openings degrade the EMI, RFI, ESD shielding performance of the sleeve. Accordingly, RFI, EMI, ESD shielding which is more economical and resistant to end fray in manufacture, more efficient and less susceptible to alteration, shifting of interlaced wires or damage in use, more reliable against wear, and exhibiting an increased useful life, is desired,

A protective sleeve manufactured in accordance with the present invention overcomes or greatly minimizes at least those limitations of the prior art described above.

### SUMMARY OF THE INVENTION

A fabric sleeve for protecting elongate members against at least one of EMI, RFI or ESD is provided. The sleeve includes a wall extending along a longitudinal axis between opposite ends. The wall is formed from a plurality of filaments interlaced with one another, with at least one of the filaments being provided as a continuous strand of conductive wire and at least some of the filaments being provided as heat-fusible nonconductive laments. The heat-fusible nonconductive filaments abut the continuous strand of conductive wire at a plurality of bond joints. The continuous strand of conductive wire is at least partially embedded in bonded, fixed attachment with the heat-fusible nonconductive filaments at the bond joints.

In accordance with another aspect of the invention, the wall can have opposite edges extending generally parallel to the longitudinal central axis and further include at least one heat-set filament biasing the opposite edges into overlapping relation with one another.

In accordance with another aspect of the invention, the heat-fusible nonconductive filaments can be a monofilament.

In accordance with another aspect of the invention, the heat-fusible nonconductive filaments can be a multifilament.

In accordance with another aspect of the invention, the heat-set filament can be a monofilament.

In accordance with another aspect of the invention, the heat-fusible nonconductive monofilaments and the at least one heat-set monofilament can be provided as a bicomponent monofilament having an outer sheath of heat-fusible material having a first melt temperature and an inner core of heat-settable material having a second melt temperature that is greater than said first melt temperature.

In accordance with another aspect of the invention, at least some of the bicomponent monofilaments can extend circumferentially about the longitudinal axis.

In accordance with another aspect of the invention, the wall can be woven with warp yarn extending generally parallel to the longitudinal axis and weft yarn extending generally transverse to the longitudinal axis, wherein at least some of the warp yarn can be provided as a continuous strand of conductive wire and at least some of the weft yarn can be provided as a heat-fusible nonconductive monofilament and a heat-set monofilament, or a bicomponent, heat-fusible sheath/heat-settable core, monofilament.

In accordance with another aspect of the invention, the plurality of filaments can be braided with one another to form generally diamond-shaped openings, wherein the generally diamond-shaped openings are substantially maintained in size and shape by the bond joints.

In accordance with another aspect of the invention, the heat-fusible non-conductive filaments can be multifilaments.

In accordance with another aspect of the invention, the wall can be seamless and circumferentially continuous about the longitudinal axis.

In accordance with another aspect of the invention, a method of constructing a fabric sleeve for protecting elongate members against at least one of EMI, RFI or ESD is provided. The method includes forming a wall extending along a longitudinal axis between opposite ends by interlacing a plurality of filaments with one another and providing at least one of the filaments as a continuous strand of conductive wire and at least one of the filaments as a heat-fusible nonconductive filament. Further, at least partially embedding the continuous strand of conductive wire in the heat-fusible nonconductive filament and fixing the continuous strand of conductive wire against relative movement with the heat-fusible nonconductive filament.

The method further including heat-fusing the heat-fusible nonconductive filament in bonded, fixed attachment with the continuous strand of conductive wire.

In accordance with another aspect of the invention, the method can further include biasing opposite edges of the wall into overlapping relation with one another by heat-setting at least one of said plurality of filaments.

In accordance with another aspect of the invention, the method can further include performing the heat-fusing and heat-setting in a simultaneous operation.

In accordance with another aspect of the invention, the method can further include performing the interlacing in a weaving process.

In accordance with another aspect of the invention, the method can further include weaving the continuous strand of wire in a warp direction extending generally parallel to the longitudinal axis and in a weft direction extending generally transverse to the longitudinal axis.

In accordance with another aspect of the invention, the method can further include providing the heat-fusible nonconductive filament as a bicomponent monofilament having an outer sheath of heat-fusible material having a first melt temperature and an inner core of heat-settable material having a second melt temperature that is greater than said first melt temperature.

In accordance with another aspect of the invention, the method can further include heat-fusing an outer sheath of a bicomponent in bonded, fixed attachment with the continuous strand of conductive wire and biasing opposite edges of the wall into overlapping relation with one another by heat-setting an inner core of the bicomponent

In accordance with another aspect of the invention, the method can further include providing the continuous strand of conductive wire as a hybrid filament including the at least one continuous strand of conductive wire twisted or served with a non-conductive multifilament.

In accordance with another aspect of the invention, the method can further include performing the interlacing in a braiding process.

In accordance with another aspect of the invention, the method can further include performing the interlacing in a knitting process.

### BRIEF DESCRIPTION OF THE DRAWINGS

These and other features and advantages will become readily apparent to those skilled in the art in view of the following detailed description of the presently preferred embodiments and best mode, appended claims, and accompanying drawings, in which:
Figure 1A is a perspective view of a self-wrapping sleeve constructed in accordance with one presently preferred embodiment of the invention;
Figure 1B is a perspective view of a self-wrapping sleeve constructed in accordance with another presently preferred embodiment of the invention;
Figure 1C is a perspective view of a self-wrapping sleeve constructed in accordance with another presently preferred embodiment of the invention;
Figure 2 is a perspective view of a seamless sleeve constructed in accordance with another embodiment of the invention;
Figure 3A-3F are enlarged views of filaments used to construct sleeves in accordance with various aspects of the invention; and
Figures 4A-4E are enlarged schematic partial views of walls of sleeves constructed in accordance with various aspects of the invention.

### DETAILED DESCRIPTION OF PREFERRED EMBODIMENTS

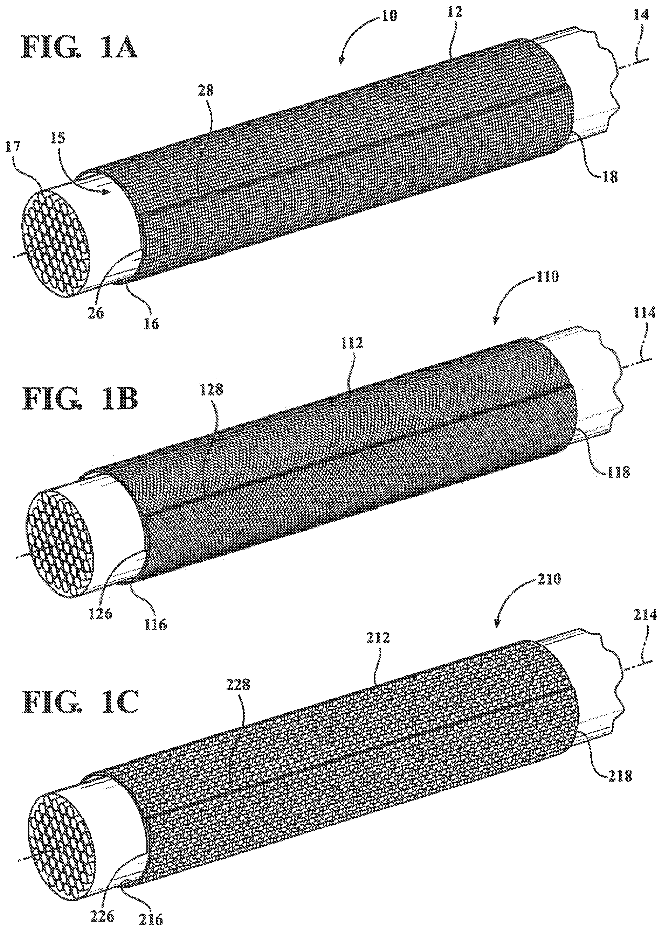

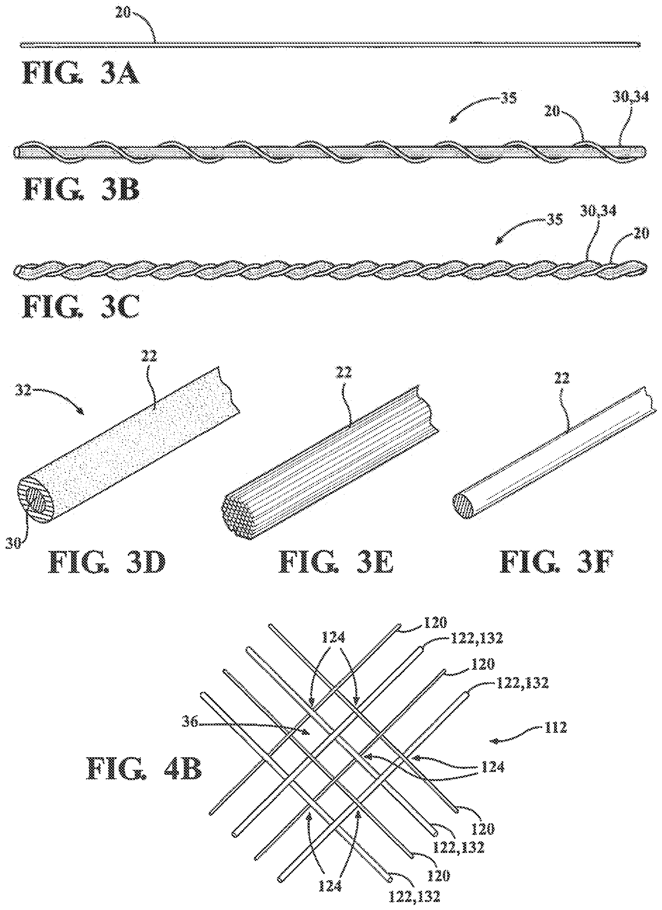

Referring in more detail to the drawings, Figure 1A shows a self-wrapping sleeve 10 constructed according in accordance with one presently preferred embodiment of the invention. The sleeve 10 has a wall 12 extending along a longitudinal axis 14 between opposite open ends 16, 18, and forms a cavity 15 for protective receipt of an elongate member or members 17 to be protected, such as wire or a wire harness, by way of example and without limitation. The wall 12 is formed from a plurality of filaments interlaced with one another, wherein the term laments is intended to include monofilaments and/or multifilaments, with specific reference being given to the type of filament, as necessary, hereafter. At least one of the filaments is provided as a continuous strand of conductive wire 20 (Figures 3A-3C) and at least some of the filaments are provided as heat-fusible nonconductive filaments 22 (Figures 3D-3F), whether being heat-fusible monofilaments or heat-fusible multifilaments. The heat-fusible nonconductive filaments 22 abut the continuous strand of conductive wire 20 at a plurality of heat-fused bond joints, also referred to as nodes 24, and in some cases, abut the conductive wire 20 along its entire or substantially entire length. The continuous strand of conductive wire 20 is at least partially embedded and bonded in fixed attachment with the heat-fusible nonconductive filaments 22 at the nodes 24, and possibly along its length, thus fixing the wire 20 in its intended location against inadvertent movement relative to the filament to which it is bonded, thereby maximizing and maintaining the electro-shield effectiveness of the sleeve 10 against at least one of electromagnetic interference (EMI), radiofrequency interference (RFI) or electrostatic discharge (ESD), while also preventing end fray of the wires 20 and other filaments, such as during and after cold cutting operations used to form the ends 16, 18,

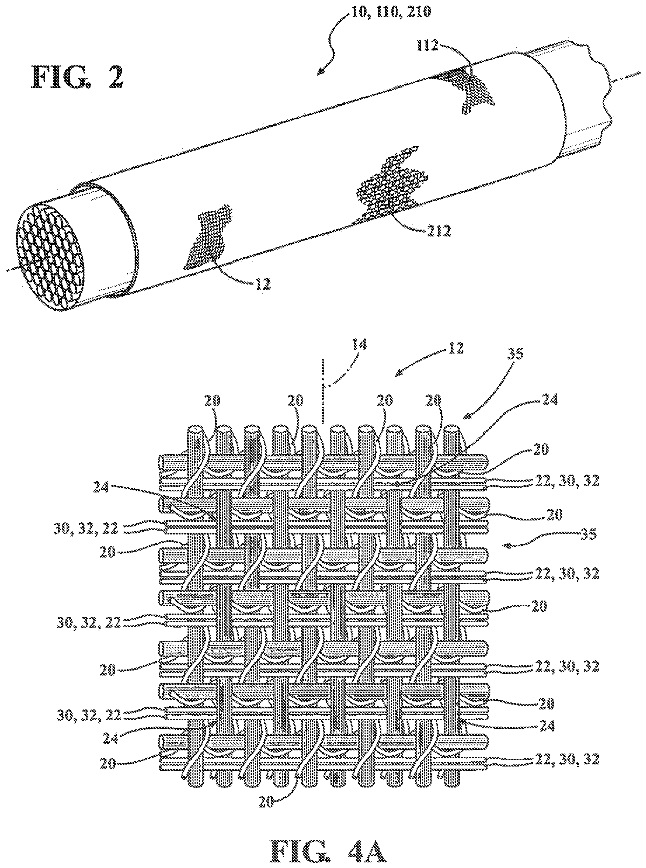

The wall 12 can be formed as a circumferentially continuous and seamless wall (Figure 2), sometimes referred to as a "closed sleeve", or as an "open" sleeve (Figure 1A) having opposite edges 26, 28 extending generally parallel to the longitudinal axis 14. To facilitate biasing the opposite edges 26, 28 of an open-type construction into overlapping relation with one another, the wall 12 can further include at least one non-conductive heat-settable polymeric filament 30, such as monofilaments of polyethylene terephthalate (PET) or polyphenylene sulfide (PPS), for example, which can be heat-set at a temperature between about 200-225 degrees Celsius. The heat-fusible non-conductive filaments 22 and the heat-settable non-conductive filaments 30 can be provided as a bicomponent monofilament 32 (Figure 3C) having an outer sheath of material having a first melt temperature forming the heat-fusible non-conductive filament 22 and a central core of heat-settable material having a second melt temperature that is greater than the first melt temperature forming the non-conductive heat-settable filament 30.

In one presently preferred embodiment, the wire 20, such as stainless steel, by way of example and without limitation, is served (Figure 3B) or twisted (Figure 3C) with a nonconductive filament 34, such as a nonconductive multifilament 34, by way of example and without limitation, wherein the multifilament 34 can be provided as any desired material. The combined wire 20 and nonconductive filament 34 form a hybrid yarn 35 that can be interlaced as a single yarn filament. The non-conductive member 34 is preferably provided as a multifilament yarn, which provides the sleeve 10 with softer texture, enhanced drape, and enhanced noise dampening characteristics, though, monofilaments could be used for the nonconductive member 34, if desired for the intended application. Depending on the application, the non-conductive members 34 can be formed from, by way of example and without limitations, polyester, nylon, polypropylene, polyethylene, acrylic, cotton, rayon, and fire retardant (FR) versions of all the aforementioned materials, though high temperature ratings are generally not required if provided as FR materials. If high temperature ratings are desired along with FR capabilities, then some presently preferred non-conductive members include m-aramid (Nomex, Conex, Kermel), p-aramid (Kevlar, Twaron, Technora), PEI (Ultem), PPS, and PEEK, for example. The individual filaments of wire 20 are about 50-150 µm in diameter, for example, and provide the sleeve 10 with at least one of electromagnetic interference (EMI), radio frequency interference (RFI), and/or electrostatic discharge (ESD) protection for the elongate member or members 17 bundled within the sleeve 10. Once enclosed within the cavity 15 of the sleeve 10, the elongate member 17 receives maximum protection from any unwanted electro-interference, such as inductive interference, thereby providing any electrical components, such as control motors, for example, connected to the elongate member 17 with maximum operating efficiency. In addition, the sleeve 10 prevents the bundled elongate member 17 from interfering electrically with any adjacent electrical components.

As shown in Figure 4A, the wall 12 is shown with the hybrid yarn 35 interlaced to extend along a warp direction, generally parallel with the longitudinal axis 14, and a weft (fill) direction, generally transverse to the longitudinal axis 14. The wall 12 is shown as being woven, such as in a plain weave pattern, though other weave patterns could be used, such as twill, satin, or otherwise. The wall 12 is shown as having only the hybrid yarns 35 extending along the warp direction; however, it includes the heat-fusible filaments 22 and heat-settable filaments 30 extending in the weft direction, wherein the heat-fusible filaments 22 and heat-settable filaments 30 can be provided as the bicomponent filaments 32, if desired. In the example shown, the weft-wise extending bicomponent filaments 32 are woven in side-by-side relation with one another and with corresponding ones of the hybrid yarns 35, and can be woven having one or more, and shown as a pair of bicomponent filaments 32, by way of example and without limitation, adjacent each hybrid yarn 35. As such, it should be recognized that the weft-wise extending hybrid yarn 35 and bicomponent yarn 32 can be woven in phase with one another such they extend over and under the same warp-wise extending hybrid filament 35. Otherwise, it is to be recognized that they can be woven individually from one another such that they are out of woven phase from one another.

Upon weaving the wall 12, the wall 12 can be curled to bring the opposite edges 26, 28 into overlapping relation with one another, whereupon suitable heat can be applied to the curled wall 12 to simultaneously heat-set the heat-settable filament(s) 30, without causing it to melt, while at the same time and temperature, at least partially causing the heat-fusible filament 22 to melt and then solidify in bonded relation with the wires 20 at bond joints 24 to fix the wires 20 in their "as interlaced" and an "as bonded" wrapped positions. Accordingly, the wire 20 is prevented from shifting from its "as interlaced" position upon being bonded and at least partially embedded in the heat-fused material of the heat-fusible filaments 22.

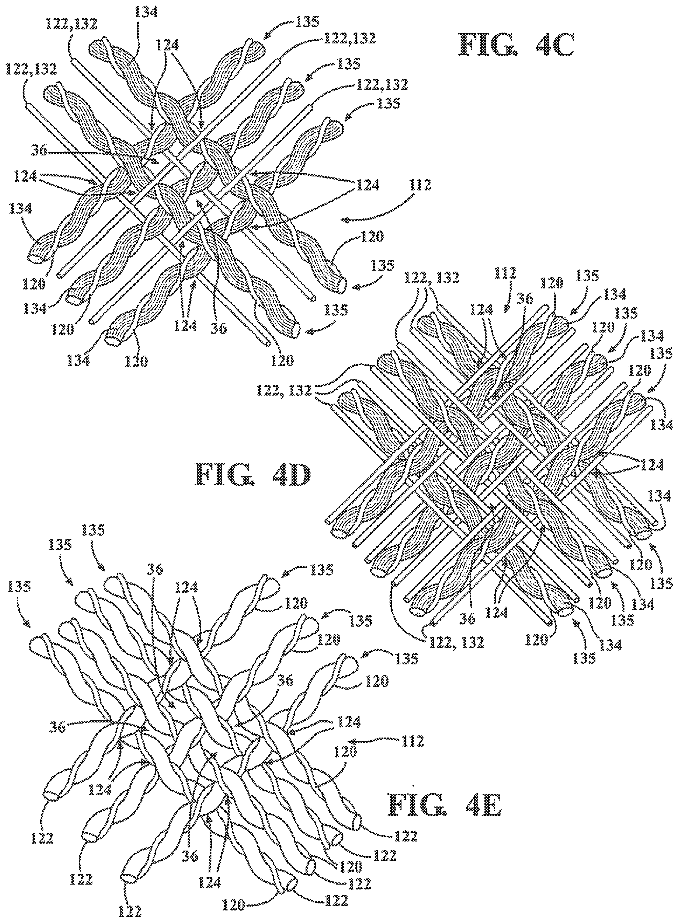

In Figure 1B, a sleeve 110 constructed in accordance with another aspect of the invention is illustrated, wherein the same reference numerals as used above, offset by a factor of 100, are used to identify like features. The sleeve 110, rather than being woven, is braided to form a wall 112 having opposite edges 126, 128 extending generally parallel to a longitudinal axis 114 between opposite ends 116, 118. Of course, as with the sleeve 10, and as shown in Figure 2, the wall 112 of the sleeve 110 can be formed as a circumferentially continuous and seamless wall. As best shown in Figures 4B-4E, different embodiments of the wall 112 can be constructed by braiding wire 120 with nonconductive, heat-fusible filaments 122 in various braid patterns and with different types of the filaments 120, 122, For example, the wire 120 can be provided as individual stands of wire, such as shown in Figure 3A, or as a hybrid filament 135, such as shown in Figures 3B-3C, as discussed above. Further, the heat-fusible filament 122 can be provided as an individual strand of a heat-fusible material, such as a multifilament as shown in Figures 3E, or as a monofilament as shown in Figure 3F, or as a bicomponent filament 132 as shown in Figure 3D, as discussed above. Upon braiding the wall 112, the wall 112 can be curled to bring the opposite edges 126, 128 into overlapping relation with one another, whereupon suitable heat can be applied to the curled wall 112 to simultaneously heat-set the heat-settable filament 130, if provided, without causing it to melt, and at least partially melt and then solidify the heat-fusible filament 122 to bond and fix the wires 120 in their "as braided" positions at the nodes 124. Accordingly, the wire 120 is prevented from shifting from its "as braided" and wrapped position upon being bonded and at least partially embedded in the heat-fused material of the heat-fusible filaments 122 at the nodes 124. It should be recognized that the wire 120 can be braided with the heat-fusible filaments 122 or bicomponent filaments 132 in various braided configurations, such as shown in Figure 4B, wherein individual filaments of wire 120 are braided and bonded with heat-fusible filaments 122 or bicomponent filaments 132. Otherwise, the wire 120, via hybrid filaments 135, can be braided in side-by-side relation with heat-fusible filaments 122 or bicomponent filaments 132 (Figures 4C-4E). In Figures 4C and 4D, the hybrid yarn 135 is shown as a wire 122 twisted with a multifilament 134, such as discussed above with regard to Figure 3C, and in Figure 4E, the hybrid yarn 135 is shown as a wire 122 twisted with a nonconductive, heat-fusible monofilament 122. Regardless of how the wall 112 is braided, generally diamond-shaped openings 36 are formed and bounded by the continuous strand of conductive wire 122, wherein the generally diamond-shaped openings 36 are fixed in size by the bond joints 124, thereby assuring the desired braided pattern is maintained by the wires 122 to provide a reliable shield against electrical interference.

In Figure 1C, a sleeve 210 constructed in accordance with another aspect of the invention is illustrated, wherein the same reference numerals as used above, offset by a factor of 200, are used to identify like features. The sleeve 210, rather than being woven or braided, is knit with at least one wire, whether an individual wire or a hybrid yarn, as discussed above, and a heat-fusible member, whether a monofilament, multifilament or bicomponent, as discussed above, to form a wall 212 having opposite edges 226, 228 extending generally parallel to a longitudinal axis 214 between opposite ends 216, 218. Of course, the wall 212 is knit with at least one of the filaments being provided as a continuous strand of conductive wire (Figures 3A-3C) and at least some of the filaments are provided as heat-fusible nonconductive filaments (Figures 3D-3F). As with the previous embodiments, the knit heat-fusible nonconductive filaments abut the continuous strand of knit conductive wire at a plurality of bond joints or nodes to fix the wire in its "as bonded" position with the respective heat-fusible nonconductive filament. Of course, as with the previous woven and braided embodiments, the knit wall 212 can be formed as a circumferentially continuous and seamless wall (Figure 2),

Obviously, many modifications and variations of the present invention are possible in light of the above teachings. It is, therefore, to be understood that within the scope of the appended claims, the invention may be practiced otherwise than as specifically described.

## Claims

1. A fabric sleeve (10; 110) for protecting elongate members (17) against at least one of electromagnetic interference (EMI), radio frequency interference (RFI) or electrostatic discharge (ESD), comprising:
a wall (12; 112) extending along a longitudinal axis (14; 114) between opposite ends (16, 18; 116, 118), said wall being formed from a plurality of filaments (20, 22; 120, 122) interlaced with one another,
**characterised in that** at least one of said filaments (20, 22; 120, 122) being provided as a continuous strand of conductive wire (20; 120) and at least one of said filaments being provided as a heat-fusible nonconductive filament (22; 122), said continuous strand of conductive wire being at least partially embedded in fixed attachment with said at least one heat-fusible nonconductive filament at bond joints (24; 124) formed of melted and solidified material of said at least one heat-fusible nonconductive filament.

2. The fabric sleeve (10; 110) of claim 1 wherein said wall (12; 112) has opposite edges (26, 28; 126, 128) extending generally parallel to said longitudinal central axis (14; 114) and further comprising at least one heat-set filament (30; 130) biasing said opposite edges into overlapping relation with one another.

3. The fabric sleeve (10; 110) of claim 2 wherein said at least one heat-fusible nonconductive filament (22; 122) is a monofilament.

4. The fabric sleeve (10; 110) of claim 3 wherein said at least one heat-set filament (30; 130) is a monofilament.

5. The fabric sleeve (10; 110) of claim 4 wherein said at least one heat-fusible nonconductive monofilament (22; 122) and said at least one heat-set monofilament (30; 130) are provided as a bicomponent monofilament (32; 132) having an outer sheath of heat-fusible material having a first melt temperature, said outer sheath forming said at least one heat-fusible nonconductive filament, and an inner core of heat-settable material having a second melt temperature that is greater than said first melt temperature, said inner core forming said at least one heat-set filament.

6. The fabric sleeve (10; 110) of claim 5 wherein at least one of said at least one bicomponent monofilament (32; 132) extends circumferentially about said longitudinal axis (14; 114).

7. The fabric sleeve (10; 110) of claim 2 wherein said wall (12; 112) is woven with warp yarn extending generally parallel to said longitudinal axis (14; 114) and weft yarn extending generally transverse to said longitudinal axis, at least one of said warp yarn and at least one of said weft yarn being provided as said continuous strand of conductive wire (20; 120) and at least one of said weft yarn being provided as said at least one heat-fusible nonconductive monofilament (22; 122) and at least one of said weft yarn being provided as said at least one heat-set monofilament (30; 130).

8. The fabric sleeve (10; 110) of claim 7 wherein said at least one continuous strand of conductive wire (20; 120) is a hybrid filament (35; 135) including said at least one continuous strand of conductive wire twisted or served with a non-conductive multifilament (34; 134).

9. The fabric sleeve (10; 110) of claim 1 wherein said plurality of filaments (20, 22; 120, 122) are braided with one another to form generally diamond-shaped openings (36) bounded by said continuous strand of conductive wire (20; 120), said generally diamond-shaped openings being fixed in size by said bond joints (24; 124).

10. The fabric sleeve (10; 110) of claim 1 wherein said heat-fusible non-conductive filaments (22; 122) are multifilaments.

11. The fabric sleeve (10; 110) of claim 1 wherein said wall (12; 112) is seamless and circumferentially continuous about said longitudinal axis (14; 114).

12. A method of constructing a fabric sleeve (10; 110) for protecting elongate members (17) against at least one of electromagnetic interference (EMI), radio frequency interference (RFI) or (ESD), electrostatic discharge comprising:
forming a wall (12, 112) extending along a longitudinal axis (14, 114) between opposite ends (16, 18;116, 118) by interlacing a plurality of filaments (20, 22; 120, 122) with one another and providing at least one of the filaments as a continuous strand of conductive wire (20; 120) and at least one of the filaments as a heat-fusible nonconductive filament (22, 122); and
at least partially embedding said continuous strand of conductive wire in said heat-fusible nonconductive filament and heat-fusing said heat-fusible nonconductive filament in bonded, fixed attachment with said continuous strand of conductive wire.

13. The method of claim 12 further including biasing opposite edges (26, 28; 126, 128) of the wall (12; 112) into overlapping relation with one another by heat-setting at least one of said plurality of filaments (20, 22; 120, 122).

14. The method of claim 13 further including performing the heat-fusing and heat-setting in a simultaneous operation.

15. The method of claim 12 further including providing the continuous strand of conductive wire (20; 120) as a hybrid filament (35; 135) including the at least one continuous strand of conductive wire twisted or served with a non-conductive multifilament (34; 134).

## Patentansprüche

1. Gewebehülse (10; 110) zum Schutz länglicher Elemente (17) gegen mindestens eine von elektromagnetischer Störung (EMI), Hochfrequenzstörung (RFI) oder elektrostatischer Entladung (ESD), umfassend:
eine Wand (12; 112), die sich entlang einer Längsachse (14; 114) zwischen gegenüberliegenden Enden (16, 18; 116, 118) erstreckt, wobei die Wand aus einer Vielzahl von Filamenten (20, 22; 120, 122) gebildet ist, die miteinander verflochten sind, **dadurch gekennzeichnet, dass** mindestens eines der Filamente (20, 22; 120, 122) als durchgehender Faden aus leitendem Draht (20; 120) bereitgestellt ist und mindestens eines der Filamente als wärmeschmelzbares nichtleitendes Filament (22; 122) bereitgestellt ist, wobei der durchgehende Faden aus leitendem Draht zumindest teilweise in fixierter Befestigung mit dem mindestens einen wärmeschmelzbaren nichtleitenden Filament an Verbindungsstellen (24; 124) eingebettet ist, die aus geschmolzenem und erstarrtem Material des mindestens einen wärmeschmelzbaren nichtleitenden Filament gebildet sind.

2. Gewebehülse (10; 110) nach Anspruch 1, wobei die Wand (12; 112) gegenüberliegende Kanten (26, 28; 126, 128) aufweist, die sich im Allgemeinen parallel zu der Längsmittelachse (14; 114) erstrecken und ferner mindestens ein thermofixiertes Filament (30; 130) umfassen, das die gegenüberliegenden Kanten in eine überlappende Beziehung zueinander vorspannt.

3. Gewebehülse (10; 110) nach Anspruch 2, wobei das mindestens eine wärmeschmelzbare nichtleitende Filament (22; 122) ein Monofilament ist.

4. Gewebehülse (10; 110) nach Anspruch 3, wobei das mindestens eine thermofixierte Filament (30; 130) ein Monofilament ist.

5. Gewebehülse (10; 110) nach Anspruch 4, wobei das mindestens eine wärmeschmelzbare nichtleitende Monofilament (22; 122) und das mindestens eine thermofixierte Monofilament (30; 130) als Zweikomponenten-Monofilament (32; 132) bereitgestellt sind, das einen äußeren Mantel aus wärmeschmelzbarem Material, der eine erste Schmelztemperatur aufweist, wobei der äußere Mantel das mindestens eine wärmeschmelzbare nichtleitende Filament bildet, und einen inneren Kern aus thermofixierbarem Material, das eine zweite Schmelztemperatur aufweist, die größer ist als die erste Schmelztemperatur, aufweist, wobei der innere Kern das mindestens eine thermofixierte Filament bildet.

6. Gewebehülse (10; 110) nach Anspruch 5, wobei sich mindestens eines von dem mindestens einen Zweikomponenten-Monofilament (32; 132) in Umfangsrichtung um die Längsachse (14; 114) erstreckt.

7. Gewebehülse (10; 110) nach Anspruch 2, wobei die Wand (12; 112) mit Kettgarn, das sich im Allgemeinen parallel zur Längsachse (14; 114) erstreckt, und Schussgarn, das sich im Allgemeinen quer zur Längsachse erstreckt, gewebt ist, wobei mindestens eines von dem Kettgarn und mindestens eines von dem Schussgarn als durchgehender Faden aus leitendem Draht (20; 120) bereitgestellt ist und mindestens eines von dem Schussgarn als mindestens ein wärmeschmelzbares nichtleitendes Monofilament (22; 122) bereitgestellt ist und mindestens eines von dem Schussgarn als mindestens ein thermofixiertes Monofilament (30; 130) bereitgestellt ist.

8. Gewebehülse (10; 110) nach Anspruch 7, wobei der mindestens eine durchgehende Faden aus leitendem Draht (20; 120) ein hybrides Filament (35; 135) ist, das den mindestens einen durchgehenden Faden aus leitendem Draht umfasst, der mit einem nichtleitenden Multifilament (34; 134) verdrillt oder umwickelt ist.

9. Gewebehülse (10; 110) nach Anspruch 1, wobei die Vielzahl von Filamenten (20, 22; 120, 122) miteinander geflochten sind, um allgemein rautenförmige Öffnungen (36) zu bilden, die durch den durchgehenden Faden aus leitendem Draht (20; 120) begrenzt sind, wobei die allgemein rautenförmigen Öffnungen durch die Verbindungsstellen (24; 124) in ihrer Größe fixiert sind.

10. Gewebehülse (10; 110) nach Anspruch 1, wobei die wärmeschmelzbaren nichtleitenden Filamente (22; 122) Multifilamente sind.

11. Gewebehülse (10; 110) nach Anspruch 1, wobei die Wand (12; 112) nahtlos und in Umfangsrichtung durchgehend um die Längsachse (14; 114) ist.

12. Verfahren zum Aufbau einer Gewebehülse (10; 110) zum Schutz länglicher Elemente (17) gegen mindestens eine von elektromagnetischer Störung (EMI), Hochfrequenzstörung (RFI) oder (ESD), elektrostatischer Entladung, umfassend:
Bilden einer Wand (12, 112), die sich entlang einer Längsachse (14, 114) zwischen gegenüberliegenden Enden (16, 18; 116, 118) erstreckt, indem eine Vielzahl von Filamenten (20, 22; 120, 122) miteinander verflochten werden, und Bereitstellen von mindestens einem der Filamente als durchgehender Faden aus leitendem Draht (20; 120) und mindestens einem der Filamente als wärmeschmelzbares nichtleitendes Filament (22, 122); und
zumindest teilweise Einbetten des durchgehenden Fadens aus leitendem Draht in das wärmeschmelzbare nichtleitende Filament und Wärmeschmelzen des wärmeschmelzbaren nichtleitenden Filaments in verbundener fixierter Befestigung mit dem durchgehenden Faden aus leitendem Draht.

13. Verfahren nach Anspruch 12, ferner umfassend das Vorspannen gegenüberliegender Kanten (26, 28; 126, 128) der Wand (12; 112) in eine überlappende Beziehung zueinander, indem mindestens eines der Vielzahl von Filamenten (20, 22; 120, 122) thermofixiert wird.

14. Verfahren nach Anspruch 13, ferner umfassend das Durchführen des Wärmeschmelzens und des Thermofixierens in einem gleichzeitigen Vorgang.

15. Verfahren nach Anspruch 12, ferner umfassend das Bereitstellen des durchgehenden Fadens aus leitendem Draht (20; 120) als hybrides Filament (35; 135), das den mindestens einen durchgehenden Faden aus leitendem Draht umfasst, der mit einem nichtleitenden Multifilament (34; 134) verdrillt oder umwickelt ist.

## Revendications

1. Manchon en tissu (10 ; 110) pour protéger des éléments allongés (17) contre au moins l'une d'une interférence électromagnétique (EMI), interférence radiofréquence (RFI) ou décharge électrostatique (ESD), comprenant :
une paroi (12 ; 112) s'étendant le long d'un axe longitudinal (14 ; 114) entre des extrémités opposées (16, 18 ; 116, 118), ladite paroi étant formée d'une pluralité de filaments (20, 22 ; 120, 122) entrelacés les uns avec les autres,
**caractérisé en ce qu'**au moins l'un desdits filaments (20, 22 ; 120, 122) étant fourni en tant qu'un brin continu de fil conducteur (20 ; 120) et au moins l'un desdits filaments étant fourni en tant qu'un filament non conducteur thermofusible (22 ; 122), ledit brin continu de fil conducteur étant au moins partiellement encastré en implantation fixe avec ledit au moins un filament non conducteur thermofusible au niveau de joints de liaison (24 ; 124) formés de matériau fondu et solidifié dudit au moins un filament non conducteur thermofusible.

2. Manchon en tissu (10 ; 110) selon la revendication 1, dans lequel ladite paroi (12 ; 112) a des bords opposés (26, 28 ; 126, 128) s'étendant globalement parallèlement audit axe central longitudinal (14 ; 114) et comprenant en outre au moins un filament thermofixé (30 ; 130) sollicitant lesdits bords opposés en relation de chevauchement l'un avec l'autre.

3. Manchon en tissu (10 ; 110) selon la revendication 2, dans lequel ledit au moins un filament non conducteur thermofusible (22 ; 122) est un monofilament.

4. Manchon en tissu (10 ; 110) selon la revendication 3, dans lequel ledit au moins un filament thermofixé (30 ; 130) est un monofilament.

5. Manchon en tissu (10 ; 110) selon la revendication 4, dans lequel ledit au moins un monofilament non conducteur thermofusible (22 ; 122) et ledit au moins un monofilament thermofixé (30 ; 130) sont fournis sous la forme d'un monofilament à deux composants (32 ; 132) ayant une gaine externe en matériau thermofusible ayant une première température de fusion, ladite gaine externe formant ledit au moins un filament non conducteur thermofusible et un noyau interne en matériau thermofixable ayant une deuxième température de fusion qui est supérieure à ladite première température de fusion, ledit noyau interne formant ledit au moins un filament thermofixé.

6. Manchon en tissu (10 ; 110) selon la revendication 5, dans lequel au moins l'un desdits au moins un monofilament à deux composants (32 ; 132) s'étend circonférentiellement autour dudit axe longitudinal (14 ; 114).

7. Manchon en tissu (10 ; 110) selon la revendication 2, dans lequel ladite paroi (12 ; 112) est tissée avec du fil de chaîne s'étendant globalement parallèlement audit axe longitudinal (14 ; 114) et du fil de trame s'étendant globalement transversalement audit axe longitudinal, au moins l'un dudit fil de chaîne et au moins l'un dudit fil de trame étant fournis en tant que ledit brin continu de fil conducteur (20 ; 120) et au moins l'un dudit fil de trame étant fourni en tant que ledit au moins un monofilament non conducteur thermofusible (22 ; 122) et au moins l'un dudit fil de trame étant fourni en tant que ledit au moins un monofilament thermofixé (30 ; 130).

8. Manchon en tissu (10; 110) selon la revendication 7, dans lequel ledit au moins un brin continu de fil conducteur (20; 120) est un filament hybride (35 ; 135) comprenant ledit au moins un brin continu de fil conducteur torsadé ou enroulé avec un multifilament non conducteur (34 ; 134).

9. Manchon en tissu (10 ; 110) selon la revendication 1, dans lequel ladite pluralité de filaments (20, 22 ; 120, 122) sont tressés les uns avec les autres pour former des ouvertures globalement en forme de diamant (36) délimitées par ledit brin continu de fil conducteur (20 ; 120), lesdites ouvertures globalement en forme de diamant étant fixées en taille par lesdits joints de liaison (24 ; 124).

10. Manchon en tissu (10; 110) selon la revendication 1, dans lequel lesdits filaments non conducteurs thermofusibles (22 ; 122) sont des multifilaments.

11. Manchon en tissu (10; 110) selon la revendication 1, dans lequel ladite paroi (12 ; 112) est sans couture et circonférentiellement continue autour dudit axe longitudinal (14 ; 114).

12. Procédé de construction d'un manchon en tissu (10; 110) pour protéger des éléments allongés (17) contre au moins l'une d'une interférence électromagnétique (EMI), interférence radiofréquence (RFI) ou décharge électrostatique (ESD), comprenant :
la formation d'une paroi (12, 112) s'étendant le long d'un axe longitudinal (14, 114) entre des extrémités opposées (16, 18 ; 116, 118) par entrelacement d'une pluralité de filaments (20, 22 ; 120, 122) les uns avec les autres et en fournissant au moins l'un des filaments en tant que brin continu de fil conducteur (20 ; 120) et au moins l'un des filaments en tant que filament non conducteur thermofusible (22, 122) ; et
l'encastrage au moins partiel dudit brin continu de fil conducteur dans ledit filament non conducteur thermofusible et la thermofusion dudit filament non conducteur thermofusible en implantation fixe, liée avec ledit brin continu de fil conducteur.

13. Procédé selon la revendication 12, comprenant en outre la sollicitation des bords opposés (26, 28 ; 126, 128) de la paroi (12 ; 112) en relation de chevauchement l'un avec l'autre par thermofixation d'au moins l'un de ladite pluralité de filaments (20, 22 ; 120, 122).

14. Procédé selon la revendication 13, comprenant en outre la réalisation d'une thermofusion et d'une thermofixation dans une opération simultanée.

15. Procédé selon la revendication 12, comprenant en outre la fourniture du brin continu de fil conducteur (20 ; 120) en tant que filament hybride (35 ; 135) comprenant l'au moins un brin continu de fil conducteur torsadé ou enroulé avec un multifilament non conducteur (34 ; 134).
